# EUROPEAN PATENT APPLICATION

(11) **EP 2 157 037 A2**
(43) Date of publication of application: **24.02.2010**
(21) Application number: 09010652.7
(22) Date of filing: 19.08.2009
(51) Int. Cl.: B65G 39/12

(54) **Roller conveyor**

(30) Priority: 21.08.2008 NL 1035852
(71) Applicant: Quintall B.V., 2295 RZ Kwintsheul, gemeente Westland (NL)
(72) Inventor: Somerwil, Micheal, 2295 RZ Kwintsheul gemeente Westland (NL); Adrichem, Paulus Martinus Jozef van, 2295 RZ Kwintsheul gemeente Westland (NL)
(74) Representative: Ferguson, Alexander

(57) **Abstract**

Roller conveyor comprising a frame having a pair of side girders extending in conveyance direction, a series of supporting roller assemblies supported in the side girders, wherein one or more supporting roller assemblies comprise a supporting roller having an axis, wherein the supporting roller is bearing mounted for rotation about the axis, wherein the supporting roller is provided with a supporting roller carrier at both ends, which carrier has a central opening, wherein each carrier is attached to the side girder in question by means of a related individual pin.

## Description

### BACKGROUND OF THE INVENTION

The invention relates to a roller conveyor. The invention furthermore relates to an assembly of a bearing, particularly a supporting roller bearing, and an attachment means for it on a holder.

Roller conveyors are used for facilitating the conveyance of articles and objects. The roller conveyor comprises a frame having side girders in which a series of supporting roller assemblies, situated transverse to the conveyance direction, support with their ends. The supporting roller assemblies comprise cylinders that are rotatable about their longitudinal axis.

In a known embodiment of a roller conveyor, the supporting roller assemblies each comprise a tube or supporting roller, which at both ends is provided with carriers that are fittingly attached therein, which carriers comprise an outer member which with the circumferential surface is clamped in the supporting roller end and an inner member that extends inside the outer member. A rotary bearing is situated between the outer member and the inner member. The inner member is provided with a concentric passage, through which with some play a thin, aluminium axle extends, which at both ends extends to beyond the side girders and is secured there in axial direction.

When assembling the known roller conveyor the thin axle is sawn to length. At one longitudinal end of the axle a stop in the form of a so-called Starlock® is arranged. At both ends the supporting roller is provided with a carrier, and is placed between the side girders, wherein the axle is inserted through a hole in one of said side girders and through the supporting roller, until, while aligning the supporting roller, the axle extends through a hole in the opposite side girder and the Starlock® abuts the side girder. A second Starlock® is then placed at the outer side of the other side girder at the other, projecting longitudinal end of the axle.

A drawback of the known roller conveyor is the number of parts and the costs connected therewith, as well as the required effort and time involved in assembling.

### SUMMARY OF THE INVENTION

It is an object of the invention to provide a roller conveyor that requires a short assembly time.

It is an object of the invention to provide a roller conveyor that can be composed of few parts.

It is an object of the invention to provide for such a roller conveyor, an assembly of a bearing for a supporting roller of a roller conveyor, that may or may not be driven, with an attachment means for it on a holder.

It is an object of the invention to provide an assembly of a bearing, particularly a bearing for a supporting roller of a roller conveyor, that may or may not be driven, with an attachment means for it on a holder, which can easily and reliably be arranged on said holder.

It is an object of the invention to provide an attachment means for such a roller conveyor and/or such an assembly.

According to one aspect, for achieving at least one of these objects the invention provides a roller conveyor comprising a frame having a pair of side girders extending in conveyance direction, a series of supporting roller assemblies supported in the side girders, wherein one or more supporting roller assemblies each comprise a tube or supporting roller having an axis, wherein the supporting roller is bearing mounted for rotation about the axis, wherein the supporting roller is provided with a supporting roller carrier at both ends (preferably identical supporting roller carriers for both ends), wherein each carrier is attached to the side girder in question by means of a related individual pin. The through-going, long axle has in this case been replaced by two, preferably identical pins, as a result of which less material can be used. Mounting is facilitated because no axle needs to be run through from the one side girder to the other side girder while keeping the supporting roller aligned. The attachment actions can take place successively at the one side girder and at the other side girder.

In one embodiment the supporting roller carrier is provided with an accommodation space for the pin, and the pins for both carriers of the supporting roller assembly can be placed from the outer side of the side girder in question, in order to extend into the accommodation space, as a result of which mounting is further facilitated. The pins can easily be inserted from said outer sides, without screws.

The pin can engage fittingly into the accommodation space, so that the carrier is stabilised and a smooth rotary movement is effected, preserving ease of insertion of the pin into the accommodation space. In the known roller conveyor said play is necessary for improving the act of inserting the axle through.

In a simple embodiment the pin itself is provided with means, preferably integrally formed with the pin, for in axial direction securing, anchoring, the pin to the carrier, against a movement out of the accommodation space of the carrier, so that the pin during conveyance and use of the roller conveyor does not fall out. When inserting the pins from the outer side of the side girders the securing means also become active by effective engagement of the carrier. An effect of the securing means may furthermore be that the freedom of movement of the supporting roller in axial direction is reduced. In the known roller conveyor the supporting roller is able to move axially between both longitudinal girders.

In one embodiment the securing means are active by abutting against a part or surface of the carrier.

The accommodation space may in one embodiment advantageously form a through-opening or passage and the securing means may engage behind the side of the carrier facing away from the side girder, particularly the edge of the opening of the passage at that side. The securing means may form resilient anchoring arms.

The pins may each have been provided with abutment means, preferably integrally formed with the pin, for abutment against the side girders for stopping the pins from an absolute movement towards the supporting roller. Placing the pins is facilitated when the pin is provided with a broadening, such as a flat head, forming the said abutment means. The flat head moreover helps preventing injuries, which may arise in case of projecting axle ends in the known roller conveyor described above. The pin can easily be held by the head. Furthermore the head may form a clearly noticeable abutment when inserting the pin through the hole in the side girder. The head of the pin and the side girder may be provided with cooperating abutment surfaces that are oriented transverse to the main direction of the pin, for counteracting rotation of the pin. The combination of abutment means and securing means, provided with the pins, at both longitudinal ends of the supporting roller may ensure keeping it in its place in axial direction between both longitudinal girders, which improves a smooth course of the roller conveyor.

The installation of the supporting roller assemblies in the roller conveyor is enhanced when the pin is formed as one unity, is one part.

By manufacturing the pin of synthetic material, particularly through injection moulding, a suitable design can be realised without too much effort.

In a manner known per se the carrier may internally be provided with a bearing, preferably a rolling bearing, for the rotation of the supporting roller about its axis. The rotary movement for the supporting roller then takes place at a distance from the pin itself. Additional advantage is that the outer surface of the pin that extends in the accommodation space can be interrupted in order to thus save on material for the pin.

The invention furthermore provides a supporting roller assembly apparently suitable and intended for a roller conveyor according to the invention.

According to a further aspect the invention provides an assembly of a bearing, particularly a bearing for a supporting roller, particularly in the form of a rolling bearing, having an inner member or inner sleeve and an outer member or outer sleeve, which are bearing mounted with respect to each other, particularly by means of bearing elements, such as balls, situated in between them, wherein the outer member or outer sleeve can be formed to be active as a carrier for a supporting roller for a roller conveyor, and with a pin-shaped body for attachment of the bearing on a holder, such as a construction part of a stationary frame, while the pin-shaped body extends through a hole in the holder and the passage defined by the inner member or inner sleeve, wherein the pin-shaped body is integrally formed from a synthetic material through injection moulding and comprises a shaft having a first shaft member dimensioned for, preferably, fittingly, extending in the inner member or inner sleeve, wherein the pin-shaped body at an insertion end is provided with hook-shaped securing means for stopping the pin-shaped body from a movement of the shaft of the pin-shaped body out of the inner member or inner sleeve and/or the hole in the holder, wherein preferably the hook-shaped securing means are formed by resilient anchoring arms, which from the insertion end of the pin-shaped body extend radially to the outside and backwards and at their ends form anchoring surfaces. The inner member and the outer member themselves form or are attached, respectively, on the inner ring and the outer ring of a (rolling) bearing. They may each have been built up from several parts. The outer member can be designed to fit in or on an end of the supporting roller.

The anchoring arms preferably are formed at the end of a singular second shaft member, which forms a continuation of the first shaft member and is narrowed with respect to the first shaft member for providing room to the anchoring arms when they are pressed in radially, wherein the room preferably is such that the anchoring arms are then able to sit within the circumference of the first shaft member. The pin-shaped body can, as mentioned above, at a gripping end opposite the insertion end be provided with a preferably flat head that extends radially from the shaft for abutment against the holder. The shaft, particularly the first shaft member, can be provided with cavities that open radially to the outside, in which way weight is reduced.

According to a further aspect the invention provides a roller conveyor as described above, wherein the supporting rollers are provided with identical assemblies of bearing and pin-shaped body according to the invention at both ends.

According to a further aspect the invention provides a pin-shaped body apparently suitable and intended for a supporting roller assembly for a roller conveyor according to the invention and/or for an assembly of bearing and pin-shaped body according to the invention.

According to a further aspect the invention provides a pin-shaped body for attaching a bearing, particularly a bearing for a supporting roller, on a construction part, wherein the pin-shaped body is integrally formed from synthetic material through injection moulding and comprises a shaft, wherein the pin-shaped body at an insertion end is provided with hook-shaped securing means for stopping the pin from a movement of the pin-shaped body out of an accommodation space for the shaft, particularly passage, formed by the bearing, wherein preferably the hook-shaped securing means are formed like resilient hook-shaped anchoring arms, which from the insertion end of the pin-shaped body slant back and radially to the outside, wherein preferably the shaft is provided with cavities that open radially to the outside, and/or wherein the pin-shaped body preferably at a gripping end opposite the insertion end is provided with a preferably flat head projecting radially from the shaft.

The invention furthermore provides a conveyance apparatus for conveying objects, comprising a roller conveyor according to the invention.

According to a further aspect the invention provides a method for assembling a roller conveyor according to the invention, wherein the supporting roller carriers are attached in the ends of the supporting roller, wherein the supporting roller carriers are provided with axial accommodation spaces that open to the outside, wherein the tubes with supporting roller carriers are brought between the two side girders while aligning the accommodation spaces with holes in the side girders, and subsequently the pins are inserted from the outside with the insertion end through the holes and into the accommodation spaces.

### SHORT DESCRIPTION OF THE DRAWINGS

The invention will be elucidated on the basis of an exemplary embodiment shown in the attached drawings, in which:
Figures 1A and 1B show a top view and an end view, respectively, of a roller conveyor having supporting roller assemblies in an exemplary embodiment according to the invention;
Figures 2A and 2B show a pin for a supporting roller assembly in the exemplary embodiment of figures 1A and 1B, in an isometric view and in side view, respectively;
Figure 3 shows a cross-section of an end of a supporting roller assembly; and
Figure 4 shows a cross-section at the location of the end of a supporting roller assembly in the exemplary embodiment of figures 1A and 1B.

### DETAILED DESCRIPTION OF THE DRAWINGS

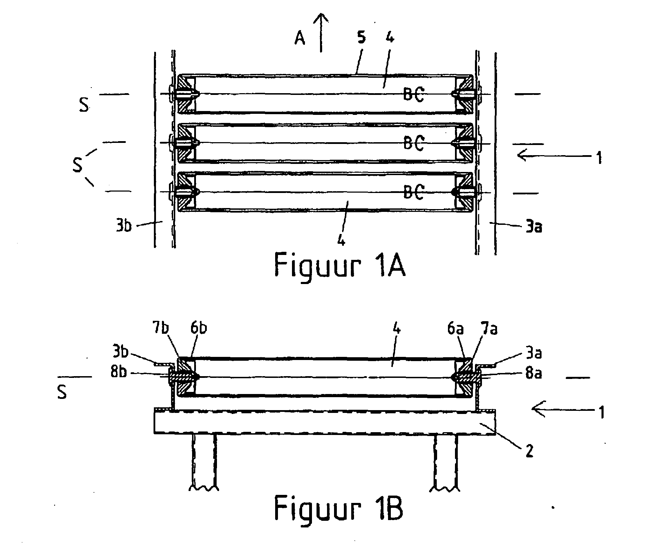

The roller conveyor 1 shown in figures 1A and 1B comprises a frame 2 of aluminium parts to be positioned on a basis. The frame 2 comprises two longitudinal girders 3a, 3b, between which a series of supporting roller assemblies 4 has been arranged. Products that are not shown here can be moved over the roller conveyor 1 in the direction A, wherein the products are supported by freely rotatable supporting rollers or tubes 5 of the supporting roller assemblies 4.

The tubes 5 can be manufactured of synthetic material (for instance PVC) and have a circular cross-section, and are each rotatable in the direction B about their axis S. At their ends 6a, 6b the tubes 5 are provided with mutually identical (supporting roller) carriers or bearing parts 7a, 7b pressed therein, which carriers or bearing parts in turn are supported on the longitudinal girders 3a, 3b by mutually identical pins 8a, 8b.

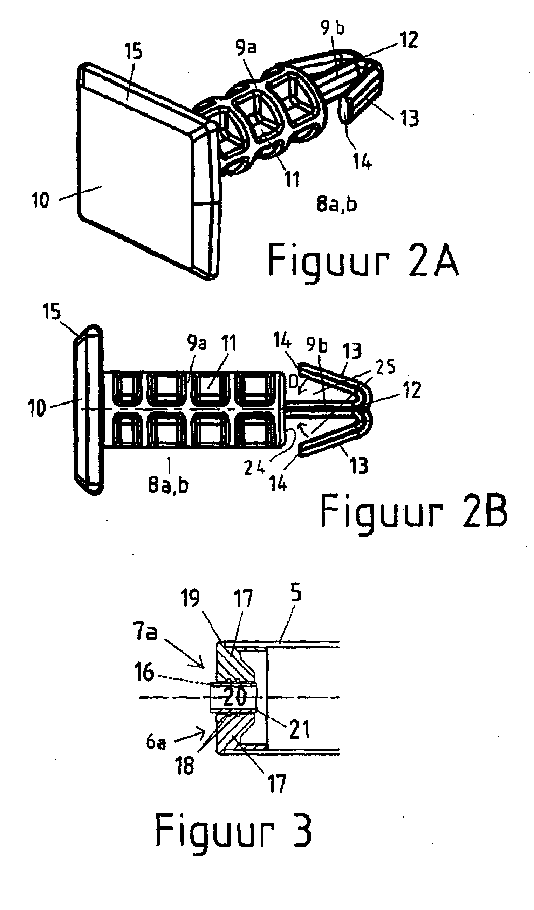

The pin 8a, 8b is further shown in figures 2A and 2B. The pin 8a, b can be manufactured by injection moulding a synthetic material, such as PA. The pin 8a, 8b comprises a shaft or stem 9, which comprises a first, broad shaft member 9a and a second, narrowed shaft member 9b. The broad member 9a is provided with recesses 11 that open radially to the outside to save on material and reduce shrinkage after forming. The narrowed member 9b is singular and extends from a transverse surface 24 in distal direction up to the pin end, the insertion or introduction end 12. From the insertion end 12 two resilient anchoring arms 13 that are integrally formed with narrowed member 9b, slant back and radially to the outside, which at their ends form anchoring or securing surfaces 14, and in unloaded condition extend therewith beyond the circumference of the shaft member 9a. The narrowed member 9b is narrow to such an extent that at the radial outer side thereof room (25) is offered to the arms 13 when they are radially pressed in, so that they fall within the profile of the shaft member 9a. In said movement radially to the inside (D) the arms 13 bend about their origins that are situated at the insertion end 12 of the pin. At the other end the pin 8a, 8b further comprises a flat head 10, here having a square cross-section, provided with an abutment edge 15 facing transverse to the main direction of the pin.

In figure 3 a supporting roller end 6a is shown, having a bearing part (supporting roller carrier) 7a -known per se-. The bearing part 7a (and likewise bearing part 7b) comprises a synthetic inner member or inner sleeve 16, provided with an end edge 21, a synthetic outer member or outer sleeve 17, provided with a turned edge 19, and between them a rolling bearing 18 which makes free rotation between inner sleeve 16 and outer sleeve 17 about the supporting roller axis S possible. The inner sleeve 16 defines a passage 20.

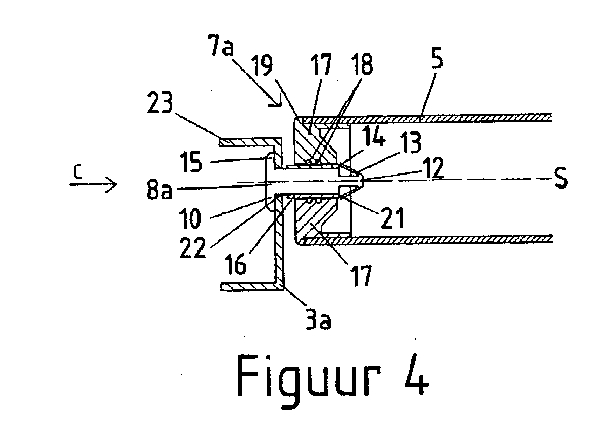

In figure 4 it is shown that the longitudinal girders 3a, 3b in their vertical web are provided with holes 22 and with an upper edge 23 that is turned to the outside.

When building up the roller conveyor 1 first bearing parts 7a, 7b are pressed into the supporting roller ends 6a, 6b until the edge 19 abuts the end edge of the supporting roller 5. Subsequently the tubes 5 are placed in the frame 2, wherein the mechanic with his one hand holds the supporting roller 5 between the two longitudinal girders 3a, 3b, so that at the side where he is positioned the passage 20 is in line with the hole 22. With his other hand he passes a pin 8a (or 8b) with the stem 9 through the hole 22 and into the passage or accommodation space 20 (direction C), wherein the arms 13 are pressed radially to the inside (D) through the wall of the sleeve 16 and elastically deform by bending from their origins to the inside into the spaces 25, until the turned arms 13 have passed entirely beyond the edge 21 of the inner sleeve 16 and have elastically sprung back outwards again and the anchoring or securing surfaces 14 thereof engage behind the bearing part 7a. In this example they are in line with the edge 21 of the inner sleeve 16.

The flat head 10 with the flat surface that faces the insertion end may here abut the web of the longitudinal girder 3a. Due to the close presence of the turned edge 23 near the sideward abutment edge 15 of the head 10 the pin 8a cannot rotate.

Subsequently the mechanic walks to the other longitudinal girder 3b, and again with his one hand brings the supporting roller 5 with passage 20 in line with hole 22 in longitudinal girder 3b, and pushes the pin 8b in its place in the same way as pin 8a.

The pin 8a,b has such dimensions with respect to those of the accommodation space 20 that for limiting play it can be accommodated in there so as to fit (snugly), yet in view of easy insertion into the accommodation space, in a slideable manner. The longitudinal dimensions can be chosen such that in the mounted condition the surfaces 14 of both pins 8a, 8b abut a surface of the bearing part 7a, 7b, which surface is oriented axially to the inside, such as edge 21, as a result of which the supporting roller 5 is axially secured.

The above description is included to illustrate the operation of a preferred embodiment of the invention and not to limit the scope of the invention. Starting from the above explanation many variations that fall within the spirit and scope of the present invention will be evident to an expert.

## Claims

1. Roller conveyor comprising a frame having a pair of side girders extending in conveyance direction, a series of supporting roller assemblies supported in the side girders, wherein one or more supporting roller assemblies each comprise a tube or supporting roller having an axis, wherein the supporting roller is bearing mounted for rotation about the axis, wherein the supporting roller is provided with a, preferably identical (supporting roller) carrier at both ends, wherein each carrier is attached to the side girder in question by means of a related individual, preferably identical, pin.

2. Roller conveyor according to claim 1, wherein the carrier is provided with an accommodation space for the pin, and the pins for both carriers of the supporting roller assembly can be placed from the outer side of the side girder in question, wherein preferably the pin engages fittingly into the accommodation space.

3. Roller conveyor according to claim 1 or 2, wherein the pin itself is provided with means, preferably integrally formed with the pin, for in axial direction securing the pin to the carrier against a movement out of the accommodation space of the carrier.

4. Roller conveyor according to claim 3, wherein the securing means are active by abutting against a part or surface of the (supporting roller) carrier, wherein preferably, the accommodation space forms a through-opening or passage and the securing means engage behind the side of the carrier that faces away from the side girder, particularly the edge of the opening of the passage at that side, wherein the securing means preferably form resilient anchoring arms.

5. Roller conveyor according to any one of the preceding claims, wherein the pin is provided with abutment means that are preferably integrally formed with the pin for abutment against the side girders for stopping the pins against a movement towards the supporting roller, wherein preferably the abutment means are formed like a broadening, particularly a flat head of the pin, wherein preferably, the head of the pin and the side girder are provided with cooperating abutment surfaces oriented transverse to the main direction of the pin, for counteracting rotation of the pin.

6. Roller conveyor according to any one of the preceding claims, wherein the carrier is internally provided with a rotary bearing, preferably rolling bearing, for the rotation of the supporting roller about its axis.

7. Roller conveyor according to any one of the preceding claims, wherein the pin is integrally formed, one-part, from synthetic material, particularly through injection moulding.

8. Assembly of a bearing particularly a bearing for a supporting roller, particularly in the form of a rolling bearing, having an inner member or inner sleeve and an outer member or outer sleeve, which are bearing mounted with respect to each other, particularly by means of bearing elements, such as balls, situated in between them, wherein the outer member or outer sleeve can be formed to be active like a carrier for a supporting roller for a roller conveyor, and with a pin-shaped body for attachment of the bearing on a holder, such as a construction part of a stationary frame, while the pin-shaped body extends through a hole in the holder and the passage defined by the inner member or inner sleeve, wherein the pin-shaped body is integrally formed from a synthetic material through injection moulding and comprises a shaft having a first shaft member dimensioned for, preferably, fittingly, extending in the inner member or inner sleeve, wherein the pin-shaped body at an insertion end is provided with hook-shaped securing means for stopping the pin-shaped body from a movement of the shaft of the pin-shaped body out of the inner member or inner sleeve and/or the hole in the holder, wherein preferably the hook-shaped securing means are formed on resilient anchoring arms, which from the insertion end of the pin-shaped body extend radially to the outside and backwards and at their ends form anchoring surfaces.

9. Assembly according to claim 8, wherein the anchoring arms are formed at the end of a singular second shaft member, which forms a continuation of the first shaft member and is narrowed with respect to the first shaft member for providing room to the anchoring arms when they are pressed in radially, wherein the room preferably is such that the anchoring arms are then able to sit within the circumference of the first shaft member.

10. Assembly according to claim 8 or 9, wherein the pin-shaped body at a gripping end opposite the insertion end is provided with a preferably flat head that extends radially from the shaft for abutment against the holder, and/or wherein the shaft is provided with cavities that open radially to the outside.

11. Roller conveyor according to any one of the claims 1-7, wherein at both ends the supporting rollers are provided with identical assemblies of bearing and pin-shaped body according to claim 8, 9 or 10.

12. Pin-shaped body apparently suitable and intended for a supporting roller assembly for a roller conveyor according to any one of the claims 1-7 and/or for an assembly according to any one of the claims 8-10.

13. Pin-shaped body, particularly according to claim 12, for attaching a bearing, particularly a bearing for a supporting roller, on a construction part, wherein the pin-shaped body is integrally formed from synthetic material through injection moulding and comprises a shaft, wherein the pin-shaped body at an insertion end is provided with hook-shaped securing means for stopping the pin from a movement of the pin-shaped out of an accommodation space for the shaft, particularly a passage formed by the inner member of the bearing, wherein preferably the hook-shaped securing means are formed like resilient hook-shaped anchoring arms, which from the insertion end of the pin-shaped body slant back and radially to the outside, wherein preferably the shaft is provided with cavities that open radially to the outside, and/or wherein the pin-shaped body preferably at a gripping end opposite the insertion end is provided with a preferably flat head projecting radially from the shaft.

14. Conveyance apparatus for conveying objects, comprising a roller conveyor according to any one of the claims 1-7, and/or one or more assemblies according to claim 8, 9 or 10.

15. Method for assembling a roller conveyor according to the invention, wherein the supporting roller carriers are attached in the ends of the supporting roller, wherein the supporting roller carriers are provided with axial accommodation spaces opening to the outside, wherein the tubes with supporting roller carriers are brought between the two side girders while aligning the accommodation spaces with holes in the side girders, and subsequently the pins are inserted from the outside with the insertion end through the holes and into the accommodation spaces.
